# EUROPEAN PATENT APPLICATION

(11) **EP 3 065 109 A2**
(43) Date of publication of application: **07.09.2016**
(21) Application number: 16158755.5
(22) Date of filing: 04.03.2016
(51) Int. Cl.: G06T 17/00, G06T 7/00, G06T 19/20

(54) **SYSTEM, DEVICE AND METHOD OF 3D PRINTING**

(30) Priority: 06.03.2015 GB 201503837
(71) Applicant: Sony Interactive Entertainment Inc., Tokyo 108-0075 (JP)
(72) Inventor: BROWN, Neil Jonathan, London, W1F 7LP (GB)
(74) Representative: D Young & Co LLP

(57) **Abstract**

A method of 3D printing a virtual environment comprises the steps of obtaining a plurality of complementary images of the environment from respective different viewpoints, calculating a 3D surface geometry of at least some of the environment depicted in the plurality of complementary images, modifying a property of the 3D surface geometry to form a 3D model, and outputting the 3D model to a 3D printer.

## Description

The present invention relates to a system, device and method of 3D printing. 3D printing is a means of volumetric printing, where instead of depositing two-dimensional pixels on a flat surface, the printer deposits three-dimensional voxels within a volume. There are numerous technologies to achieve this, including the use of lasers to melt and fuse materials such as metal powder in incremental layers to build a structure, or the use of a high-temperature print-head to deposit small droplets of plastic that cool and harden to build up a 3D model.

The design for such a 3D model is typically generated in a computer-aided design program, in which a user defines surfaces and volumes of a virtual model. A drawing list is then generated by the program specifying the order in which to fuse or deposit materials to render the virtual model using the 3D printer.

This approach has resulted in the creation of many aesthetically and functionally unique objects, some of which are difficult to make using conventional processes. However the utility of 3D printers has still not been fully explored.

The present invention aims to provide a new use for 3D printers.

In a first aspect, a method of 3D printing a virtual environment is provided according to claim 1.

In another aspect, an entertainment device is provided according to claim 12.

In another aspect, a 3-D printing system is provided according to claim 15.

Further respective aspects and features of the invention are defined in the appended claims.

Embodiments of the present invention will now be described by way of example with reference to the accompanying drawings, in which:
Figure 1 is a schematic diagram of an entertainment device in accordance with embodiments of the present invention.
Figure 2A is schematic diagram of a side elevation of a 3D printer in accordance with embodiments of the present invention.
Figure 2B is schematic diagram of a plan view of a 3D printer in accordance with embodiments of the present invention.
Figure 3 is a schematic diagram of a videogame virtual environment in accordance with embodiments of the present invention.
Figure 4 is a schematic diagram of a projection in to a 3D model space in accordance with embodiments of the present invention.
Figures 5 A-E are schematic diagrams illustrating a process of generating geometry for 3D printing in accordance with embodiments of the present invention.
Figure 6 is a schematic diagram of a 3D printable videogame character in accordance with embodiments of the present invention.
Figure 7 is a schematic diagram of a 3D printable videogame character in accordance with embodiments of the present invention.
Figure 8 is a schematic flow diagram of a method of 3D printing a virtual environment in accordance with embodiments of the present invention.

A system, device and method of 3D printing are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an embodiment of the present invention, an entertainment device is operably coupled to a 3D printer. The entertainment device is arranged in operation to capture snapshots of videogame play for replication by the 3D printer, as explained later herein.

### Entertainment device

An example of a suitable entertainment device is the Sony® PlayStation 4® device.

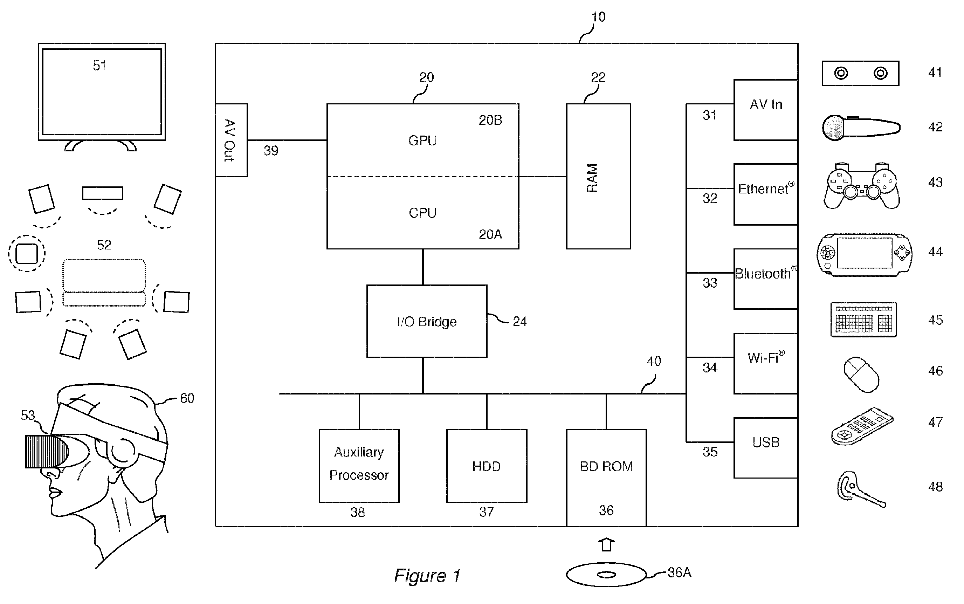

Figure 1 schematically illustrates the overall system architecture of the Sony® PlayStation 4® entertainment device. A system unit 10 is provided, with various peripheral devices connectable to the system unit.

The system unit 10 comprises an accelerated processing unit (APU) 20 being a single chip that in turn comprises a central processing unit (CPU) 20A and a graphics processing unit (GPU) 20B. The APU 20 has access to a random access memory (RAM) unit 22.

The APU 20 communicates with a bus 40, optionally via an I/O bridge 24, which may be a discreet component or part of the APU 20.

Connected to the bus 40 are data storage components such as a hard disk drive 37, and a Blu-ray ® drive 36 operable to access data on compatible optical discs 36A. Additionally the RAM unit 22 may communicate with the bus 40.

Optionally also connected to the bus 40 is an auxiliary processor 38. The auxiliary processor 38 may be provided to run or support the operating system.

The system unit 10 communicates with peripheral devices as appropriate via an audio/visual input port 31, an Ethernet ® port 32, a Bluetooth ® wireless link 33, a Wi-Fi ® wireless link 34, or one or more universal serial bus (USB) ports 35. Audio and video may be output via an AV output 39, such as an HDMI port.

The peripheral devices may include a monoscopic or stereoscopic video camera 41 such as the PlayStation Eye ® or PS Camera ®; wand-style videogame controllers 42 such as the PlayStation Move ® and conventional handheld videogame controllers 43 such as the DualShock 4 ®; portable entertainment devices 44 such as the PlayStation Portable ® and PlayStation Vita ®; a keyboard 45 and/or a mouse 46; a media controller 47, for example in the form of a remote control; and a headset 48. Other peripheral devices may similarly be considered such as a phone or tablet, printer, or a 3D printer (not shown).

The GPU 20B, optionally in conjunction with the CPU 20A, generates video images and audio for output via the AV output 39. Optionally the audio may be generated in conjunction with or instead by an audio processor (not shown).

The video and optionally the audio may be presented to a television 51. Where supported by the television, the video may be stereoscopic. The audio may be presented to a home cinema system 52 in one of a number of formats such as stereo, 5.1 surround sound or 7.1 surround sound. Video and audio may likewise be presented to a head mounted display unit 53 worn by a user 60. The head mounted display unit may have integral headphones, attachable headphones / earbuds, or rely on separate audio being supplied to the user.

In more detail, regarding processing, the CPU 20A may comprise two 64-bit quad core modules, based for example on the 'Jaguar' CPU architecture by AMD ®, for a total of eight cores. Each core may use a base clock speed of 1.6 GHz. The GPU 20B may comprise 18 compute units each comprising 64 cores, for a total of 1152 cores. The GPU may be based for example on the Radeon ® GCN architecture by AMD ®. The GPU cores may be used for graphics, physics calculations, and/or general-purpose processing.

Regarding storage, the system RAM 22 may comprise 8GB RAM, for example in 16 blocks of 512MB GDDR5 unified system memory, and is shared by the CPU and GPU. Meanwhile the hard disk may be a 500 GB hard drive. Optionally the hard drive is mounted so as to be replaceable by a user of the system unit. The Blu-ray ® drive may read data from Bluray discs at multiples of the standard reading speed. The Blu-ray drive may be operably coupled to a hardware-implemented so-called 'zlib' decompression module. The auxiliary processor may be provided with its own local memory, such as for example 256 MB of DDR3 SDRAM.

Regarding communication, the system unit 10 may comprise 802.11 b/g/n Wi-Fi® 34; 10Base-T, 100BASE-TX and 1000BASE-T Ethernet ® 32; Bluetooth 2.1 ® 33 and one or more USB 3.0 ports 35. The system unit may receive video and optionally audio via AV input 31. Similarly the system unit may output video and optionally audio via AV output 39 or via Bluetooth ®, Wi-Fi ® or USB.

Regarding peripherals, the system unit is typically provided with at least one hand-held controller 43 such as the DualShock 4 ®. This controller may be used to interact with user interfaces presented by the system unit that are associated with the operating system and/or a particular game or application being run by the system unit.

The user may also interact with the system unit using a video camera 41 such as the PlayStation Eye ®. This may provide monoscopic or stereoscopic video images to the system unit 10 via for example AV input 31. Where these images capture some or all of the user, the user may enact gestures, facial expressions or speech as appropriate to interact with the currently presented user interface.

Alternatively or in addition, a controller designed to assist with camera-based user interaction, such as the PlayStation Move ® 42, may be provided. This controller has a wand form factor and an illuminated region that facilitates detection of the controller within a captured video image. Illuminated regions may similarly be provided on other controllers 43, such as on the DualShock 4 ®. Both kinds of controller comprise motion sensors to detect transverse movement along three axes and rotational movement around three axes, and wireless communication means (such as Bluetooth®) to convey movement data to the system unit. Optionally such controls can also receive control data from the system unit to enact functions such as a rumble effect, or to change the colour or brightness of the illuminated region, where these are supported by the controller.

The system unit may also communicate with a portable entertainment device 44. The portable entertainment device 44 will comprise its own set of control inputs and audio/visual outputs. Consequently, in a 'remote play' mode some or all of the portable entertainment device's inputs may be relayed as inputs to the system unit 10, whilst video and/or audio outputs from the system unit 10 may be relayed to the portable entertainment device for use with its own audio/visual outputs. Communication may be wireless (e.g. via Bluetooth ® or Wi-Fi ®) or via a USB cable.

Other peripherals that may interact with the system unit 10, via either wired or wireless means, include a keyboard 45, a mouse 46, a media controller 47, and a headset 48. The headset may comprise one or two speakers, and optionally a microphone.

Regarding output, the GPU typically generates a 1080p high definition image to the AV output 39. The frame rate of these images may vary. The image is typically conveyed to a television 51 via a standard HDMI connection, optionally via an AV receiver (not shown). Where the television supports stereoscopic display, and optionally in response to a command from the user, the 1080p high definition may be formatted as a stereoscopic image for example using a left-right side-by-side format. The television will then split the image in two and interpolate each half to full width for respective presentation to the user's left and right eyes, either by use of specially adapted glasses or by use of directed light paths from an auto-stereoscopic display.

Optionally in conjunction with an auxiliary audio processor (not shown), the APU 20 generates audio for output via the AV output 39. The audio signal is typically in a stereo format or one of several surround sound formats. Again this is typically conveyed to the television 51 via an HDMI standard connection. Alternatively or in addition, it may be conveyed to an AV receiver (not shown), which decodes the audio signal format and presented to a home cinema system 52. Audio may also be provided via wireless link to the headset 48 or to the hand-held controller 43. The hand held controller may then provide an audio jack to enable headphones or a headset to be connected to it.

Finally, the video and optionally audio may be conveyed to a head mounted display 53 such as the Sony Morpheus ® display. The head mounted display typically comprises two small display units respectively mounted in front of the user's eyes, optionally in conjunction with suitable optics to enable the user to focus on the display units. Alternatively one or more display sources may be mounted to the side of the user's head and operably coupled to a light guide to respectively present the or each displayed image to the user's eyes. Alternatively, one or more display sources may be mounted above the user's eyes and presented to the user via mirrors or half mirrors. In this latter case the display source may be a mobile phone or portable entertainment device 44, optionally displaying a split screen output with left and right portions of the screen displaying respective imagery for the left and right eyes of the user. Their head mounted display may comprise integrated headphones, or provide connectivity to headphones. Similarly the mounted display may comprise an integrated microphone or provide connectivity to a microphone.

In operation, the entertainment device defaults to an operating system such as Orbis OS®, a variant of FreeBSD 9.0. The operating system may run on the CPU 20A, the auxiliary processor 38, or a mixture of the two. The operating system provides the user with a graphical user interface such as the PlayStation Dynamic Menu. The menu allows the user to access operating system features and to select games and optionally other content.

Upon start-up, respective users are asked to select their respective accounts using their respective controllers, so that optionally in-game achievements can be subsequently accredited to the correct users. New users can set up a new account. Users with an account primarily associated with a different entertainment device can use that account in a guest mode on the current entertainment device.

Once at least a first user account has been selected, the OS may provide a welcome screen displaying information about new games or other media, and recently posted activities by friends associated with the first user account.

The OS then provides a series of icons for the user to select amongst, for example in the form of two parallel horizontal rows. In this example the content of the top row may be fixed and relate to operating system features, whilst the bottom row may be at least in part dynamically assembled to relate to recent activities, such as providing launch icons for the most recently played or downloaded games.

The top row of icons may provide access to screens relating to an online store; notifications; friends; text chat; voice chat; user account profile; trophies; system settings; and/or power management.

When selected, the online store may provide access to games and media for download to the entertainment device. A welcome screen may highlight featured content. Where an online subscription service is provided (Such as so-called 'PS Plus'), then content or prices exclusive to that service may be provided in addition to standard content or prices. The store may also provide means to pay money into an online account for purchasing content, and may provide a record of purchases, enabling a user to download a purchased item of content at a later date or multiple times (for example after choosing to swap to a larger hard disk).

The notifications screen provides information about new trophies; game alerts (for example relating to special online events); game invites from friends; download and/or update status for content, and upload status for content being shared.

The friends screen allows a user to view all their friends or filter them according to who is currently online; additionally a user can review a list of other users they have met within games or other multi-user applications of the entertainment device, and optionally send such a user a friend request or conversely block a user to avoid encountering them again. In addition, optionally a user can request that a friend allow them to see their real name; subsequently they can also contact this friend via other social media such as Facebook®, optionally via a built-in interface.

Text chat provides a means to send messages to friends and other users of the entertainment device's network. Meanwhile voice chat provides a means to invite a group of friends to share an audio channel over the entertainment device's network so that they can chat to each other, for example whilst playing a game.

The account user profile screen allows a user to review statistics relating to their activities with the entertainment device. The screen also provides means to configure the user's appearance on the network, such as selecting an avatar to be associated with their username.

The trophy screen allows a user to view their trophies and in-game progress; trophies may be organised on a game-by-game basis. A user's trophies or other performance statistics may be compared with those of their friends to identify the friend with the closest better performance statistic in a game, so as to encourage the user to play further or improve their play of the game.

The system settings screen provides access to further menus enabling the user to configure aspects of the operating system. These include setting up an entertainment device network account, and network settings for wired or wireless communication with the Internet; the ability to select which notification types the user will receive elsewhere within the user interface; login preferences such as nominating a primary account to automatically log into on start-up, or the use of face recognition to select a user account where the video camera 41 is connected to the entertainment device; parental controls, for example to set a maximum playing time and/or an age rating for particular user accounts; save data management to determine where data such as saved games is stored, so that gameplay can be kept local to the device or stored either in cloud storage or on a USB to enable game progress to be transferred between entertainment devices; system storage management to enable the user to determine how their hard disk is being used by games and hence decide whether or not a game should be deleted; software update management to select whether or not updates should be automatic; audio and video settings to provide manual input regarding screen resolution or audio format where these cannot be automatically detected; connection settings for any companion applications run on other devices such as mobile phones; and connection settings for any portable entertainment device 44, for example to pair such a device with the entertainment device so that it can be treated as an input controller and an output display for so-called 'remote play' functionality.

The entertainment device network account may be set up to include the user's real name and optionally other personal details, bank details for online payments, an indication of whether the current entertainment device is the primary entertainment device associated with the user account, and the ability to selectively transfer licenses between entertainment devices where the user account is associated. Additionally a user may provide user account information for other services for which access may be integrated into the operating system, such as Facebook® and Twitter®; this enables easy sharing of the user's activities with friends who may not be on the entertainment device network but are on other social networks.

The power management icon allows the user to turn the device off. Optionally it may provide a timer for the entertainment device to turn off within a after a predetermined time unless the user intervenes.

The bottom row of the menu may show icons for recently played games, enabling quick access. Optionally selection of a game icon provides a summary of game progress and any relevant statistics, and where appropriate information such as progress and commentary from friends who have also played or are playing the game. Other information regarding the game may also be provided such as details of recently applied updates, or links to downloadable content associated with the game that is available in the online store.

The bottom row may also provide access to other media sources such as a web browser, television and music media applications, and any live streaming service provided by the entertainment device network. Additionally an icon may be provided to access the full library of content on the device, such as games that have not been recently played.

The user interface of the operating system may also receive inputs from specific controls provided on peripherals, such as the hand-held controller 43. In particular, a button to switch between a currently played game and the operating system interface may be provided. Additionally a button may be provided to enable sharing of the player's activities with others; this may include taking a screenshot or recording video of the current display, optionally together with audio from a user's headset. Such recordings may be uploaded to social media hubs such as the entertainment device network, Twitch®, Facebook® and Twitter®.

### 3D Printer

As was noted previously, the entertainment device is operably coupled to a 3D printer.

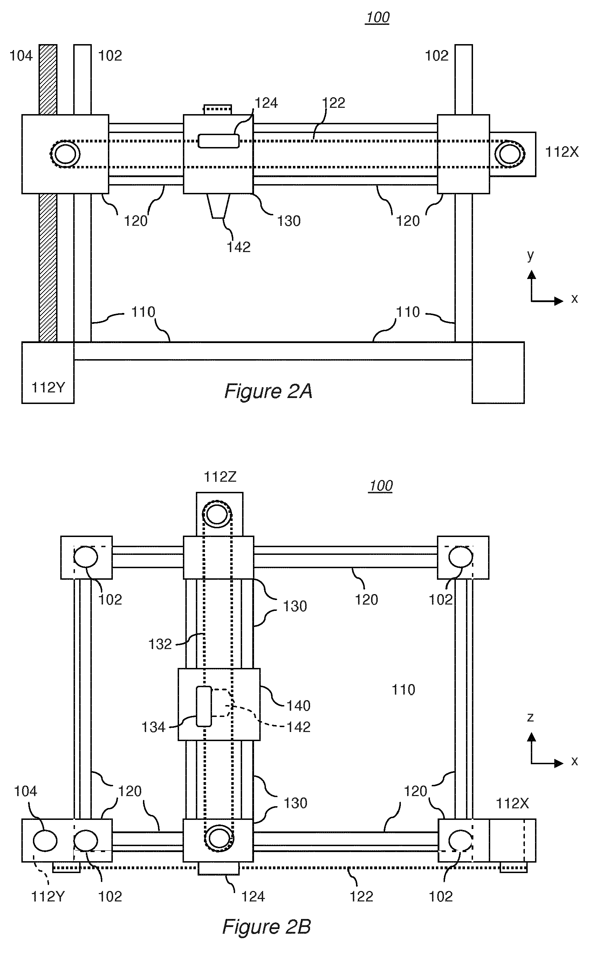

It will be appreciated that there are numerous technologies for 3D printing that are typically differentiated by how layers are built up to create a model. One technology is known as selective laser sintering (SLS), where a layer of powder is selectively fused together by a laser to create solid regions; a new layer of powder is then placed on top and the process repeats to build the model. Another technology is known as stereolithography, and uses a photo-reactive liquid in conjunction with one or more lasers to harden the liquid at defined points, thereby building the model, again typically in layers. Whilst both of these techniques are envisaged within the scope of embodiments of the present invention, they have the disadvantage of requiring both powerful lasers and large volumes of matrix material in the form of powder or liquid around the model, which make them less practical for domestic use. Consequently a preferred technology is fused deposition modelling (FDM). This approach melts plastic in a printer head that moves over successive layers of the model, depositing droplets of plastic at selective positions in each layer in a manner similar to the deposition of droplets of ink by an inkjet printer on a sheet of paper. This avoids the need for lasers or a surrounding matrix of the raw material used by the model. Accordingly for the purposes of understanding an FDM 3D printer is briefly described herein with reference to Figures 2A and 2B.

Figure 2A shows a side elevation of a simple FDM 3D printer 100, whilst Figure 2B shows a plan view of the same FDM 3D printer. The printer 100 comprises a base structure 110 that provides a working surface for assembly of the printed model and support struts 102 upon which a printer frame 120 can be raised and lowered.

In an example mechanism, a motor 112Y is coupled to a drive bar 104 comprising a screw thread; a printer frame 120 then comprises a coupling section with a threaded hole and a smooth hole, the threaded hole being engaged with the drive bar and the smooth hole being engaged with one of the support struts. When, under instruction from a printer driver, the motor 112Y turns the drive bar in a clockwise or anticlockwise direction, the printer frame is moved up or down the drive bar and support strut (i.e. along the γ-axis) and hence raises or lowers a printer carriage 130 attached to it.

As can be seen from Figure 2B, the printer frame 120 is typically mounted on four support struts 102. Optionally a second motor, drive bar and coupling section may be provided at an opposing corner of the frame, to reduce strain on the frame and the motor.

The printer frame 120 supports the printer carriage 130. A motor 112X is coupled to a drive band 122 that is fixed by fixing means 124 to the printer carriage 130. When, under instruction from a printer driver, the motor 112X rotates the drive band clockwise or anticlockwise, the printer carriage 130 is moved right or left along the printer frame 120 (i.e. along the x-axis) and hence moves an attached printer mechanism 140 laterally.

The printer carriage 130 supports the printer mechanism 140. A motor 112Z is coupled to a drive band 132 that is fixed by fixing means 134 to the printer mechanism 140. When, under instruction from a printer driver, the motor 112Z rotates the drive band clockwise or anticlockwise, the printer mechanism 140 is moved in or out of a depth direction (i.e. along the z-axis).

The printer mechanism 140 itself comprises heating means for heating the end of one or more plastic threads fed into the mechanism (not shown), or for heating grains of plastic powder obtained from a hopper on the mechanism (not shown). The heating of the plastic or alternatively the release of heated plastic is controlled by instruction from a printer driver. A resulting bead or droplet of melted plastic is then deposited onto the working surface 110 of the printer or a partially built model (not shown) as applicable, through the printer head or nozzle 142.

In this way, under suitable instruction from a printer driver, the printer head can be positioned anywhere within a working volume of the 3D printer using motors 112X, Y, Z, and a droplet of plastic can be deposited at that position, which then cools and hardens to form a voxel of a 3D model. Through successive movement of the printer head and selective melting or release of plastic droplets, a completed 3D model can thus be built from a plurality of such voxels.

Typically the printer driver itself is a software module in a computer-aided design system that receives model geometry describing the 3D model. The printer driver then generates thin slices of the 3D model one voxel thick for each layer in the *y* direction, and determines the *x*, *z* coordinates for each voxel in that layer. The printer driver then outputs a sequence of instructions to the printer 100 to move the printer head 142 to the respective x, z coordinate for each voxel in layer *y*, where the printer mechanism is instructed to heat and/or release a droplet of plastic to form a voxel at that position. In this way the digital 3D model is rebuilt as a physical model by the 3D printer.

In an embodiment of the present invention, the printer driver is incorporated into the videogame, or the operating system of the entertainment device, or a middleware library of support functions used by either the videogame or the operating system.

### Virtual Environment

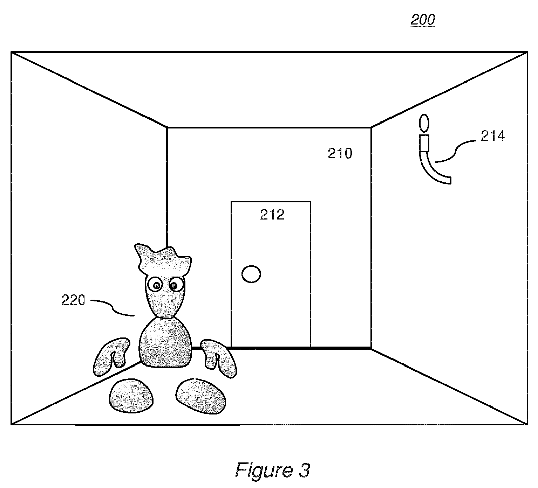

Referring now to Figure 3, a videogame running on the entertainment device comprises a virtual environment in which typically a plurality of entities or environmental elements are dynamically viewed as the user changes the position of viewpoint and as entities or elements of the game enact scripted activities or react to the user's behaviour, or a mixture of both.

In Figure 3, a simple environment 200 is illustrated comprising a room 210 with a door 212; on one wall there is mounted a candle in a candleholder 214. In the room is the player's character 220 (here illustrated for example by the fictitious game character Blobman).

The virtual environment is constructed in 3D from geometry data, typically in the form of polygons defining a surface of an object. These polygons may be predefined for example in the case of static objects and background scenery, or may be warped/repositioned or procedurally generated in the case of mobile entities within the environment such as the player's character. It will be appreciated that references herein to 'polygons' encompasses preliminary geometrical features such as vertices, from which polygons are built, where these are used in the graphics pipeline. Similarly, voxel rendering uses equivalent geometric features to describe objects. Hence processes described as applying to polygons may be applied in whole or part to such other geometrical features as appropriate.

The virtual environment is then prepared for presentation to the user from a selected viewpoint. Elements of the environment that have line of sight to the user are patterned with texture information appropriate to the object they represent, and the textured geometry is further processed for lighting effects, such as variations in brightness from virtual light sources, and bump mapping (or similar techniques such as displacement mapping or use of an isosurface) to simulate how the texture should interact with such a virtual light source. Additionally other effects such as volumetric fog and particle effects may be included.

The final rendered image is then presented to the user, typically via a 2D or 3D television or via a head mounted display.

Often within such games, the user has an experience that they wish to share with friends and/or the wider world. To this end, as noted previously an entertainment device such as the PlayStation 4 ® can have a 'share' button on its controller to facilitate a capture of the image presented to the user, which can then be uploaded to a sharing site such as a social media site.

### Printing a 3D model of the environment from a collection of images

In an embodiment of the present invention, the user is provided with the option to select a moment within the game from which to create a 3D printed model. In this way, the user can create tangible mementos of their in-game experiences.

In an embodiment of the present invention, when the entertainment device receives an input indicating that a user wishes to create a 3D print of the current scene, the game state is frozen (e.g. paused) so that it can be analysed for 3D printing.

It will be appreciated that the in-game geometry, which might be considered a likely source of information for a 3D model, may be a mix of polygons, skeletal models, skin models, bump maps and physics derived procedural models or deformations to models, etc., that are only combined in one place, and in one format, when they are rendered for display on screen.

Consequently, in an embodiment of the present invention, a 3D model is constructed for 3D printing using these rendered images in preference to the potentially disparate in-game representations of the virtual environment geometry. However, a single rendered image will typically comprise insufficient information to fully model the virtual environment for 3D printing.

As was noted previously herein, during normal play the virtual environment is rendered for a particular viewpoint. Furthermore To enable high frame rates and efficient processing, then as part of this rendering process elements of the environment that are not visible from that particular viewpoint are culled early in the rendering process.

Consequently only the elements of the environment visible from the selected viewpoint are preserved and rendered. If one were to generate a 3D printer model of the environment using this render, then all aspects of the model that were not visible from that particular viewpoint would be missing or would have to be filled in using some form of interpolation algorithm. Clearly this would give rise to unsatisfactory results when the real printed model was viewed from any other angle.

Accordingly, in an embodiment of the present invention, while the game state is frozen the entertainment device generates a plurality of rendered images of the virtual environment from different viewpoints.

Preferably at least two opposing viewpoints are rendered, with the first viewpoint typically being the one originally displayed to the user. Between the two images, this results in the rendering of most if not all of the elements of the environment culled in the original rendered view.

Optionally three viewpoints are rendered, preferably equally distributed on a plane, with the first viewpoint being the one originally displayed to the user and the plane being horizontally centred on the direction of view of that first viewpoint. Again this results in the rendering of most if not all of the elements of the environment culled in the original rendered view, but is likely to capture more elements of the environment that may have been occluded by objects both in front and behind them and hence not rendered in either of the two viewpoints mentioned above.

More generally, as more viewpoints are distributed on the plane, fewer elements of the environment remain un-rendered. For example, the entertainment device may conduct a 'fly-by' within the environment, capturing N images, where N is for example between 2 and 360. The number of images captured is a trade-off between fidelity of the eventual model and the memory and processing capacity of the entertainment device needed to analyse the captured images (as discussed later herein).

Optionally, one or more viewpoints looking down from above the virtual environment may also be rendered (either as individual images or as part of a flyby sequence) to provide additional detail for those elements of the environment that are substantially parallel to the previously captured viewpoints on a single plane, such as the top surfaces of some environmental features.

In an embodiment of the present invention, metadata relating to the position and viewing direction of the virtual camera representing the viewpoint for each image is also recorded and associated with the respective image.

It will be appreciated that the virtual environment may represent a large area, whereas the 3-D model will encompass a limited area determined by the size of models that can be generated by a particular 3-D printer and the scale at which the environment is printed. Preferably the properties of the particular 3-D printer are known if it is in communication with the entertainment device (otherwise, a default model size may be assumed or the user may stipulate a size); similarly the scale at which the environment is printed may be selected by the user or may be automatically determined with reference to a key character within the environment, such as the user's avatar. This avatar may be chosen to be a particular size within the final 3-D printer model (as a non-limiting example, 5 cm tall by default), and the extent of the environment to be printed at the same scale may thus be calculated. Alternatively, in a 'character print' mode, only a particular character, such as the user's avatar, may be printed, without surrounding in-game environmental features. This may be of particular value for cases where the user is allowed to customise their own in-game character, and becomes emotionally attached to it.

The equidistant distribution of two or more viewpoints may thus be centred on this key character, and may optionally use any in-game camera control logic to determine the necessary direction of view needed to centre the key character within each captured image.

Where the game presents a first-person view, then based upon the model size and an assumed or user-set scale, the centre point of the model can be calculated and the viewpoints can be distributed around it.

Combining the above approaches, the entertainment device may capture images by selecting sample points on a sphere of predetermined radius, and which is centred on that centre point. Optionally those sample points that are occluded by an environmental barrier (such as a point on the sphere below the ground or inside a mountain) may either be skipped, or the radius of the sphere may be locally reduced until the surface is no longer occluded by the environmental barrier. The sampling scheme may initially select viewpoints on the above mentioned plane comprising the original viewpoint and centre point and parallel to the horizontal axis of the original viewpoint, before optionally selecting one or more viewpoints on the sphere above this plane, and optionally one or more viewpoints on the sphere below this plane. The predetermined radius may be equal to the distance between the original viewpoint and the determined centre point of the model, to maintain consistency with the original captured image, or the original image and the subsequent additional image(s) may be re-rendered at a different effective radius, for example a minimum radius at which the field of view of the image encompasses the ground area that will be included in the 3D printed model. Notably, traditionally games use lower-fidelity models at greater draw distances to simplify the rendering process. Therefore optionally the radius may be constrained to a maximum distance equal to a rendering distance at which the game would select a lower-fidelity model of a key element of the image (such as the user's avatar). Further optionally, this may be overridden by a user for aesthetic purposes or because they wish to ensure that a particular environmental feature or combination of features is included in the final model. This may be of particular value for cases where the user is allowed to customise the environment, for example by creating so-called 'mods'.

In any event, the result is a set of images capturing two or more complimentary viewpoints of the virtual environment for a given game state.

It will be appreciated that the above image capture procedure may be controlled by the entertainment device. However, alternatively or in addition the user may capture images of the same scene from one or more different viewpoints by selecting these viewpoints themselves and using a conventional image capture process. These viewpoints may not correspond to the preferred distributions discussed previously herein. It will similarly be appreciated that images of the same scene from different viewpoints can be captured by different users at different times on different entertainment devices; providing a user has access to a pooled set of images (for example if they are posted to an online forum, or are stills extracted from a 'fly-by' video that moves or changes viewpoints, such as may be included in a trailer video for the videogame) then an equivalent set of two or more complementary viewpoints of the virtual environment may be obtained.

Given these images and optionally associated metadata relating to the viewpoint position and direction, an entertainment device can analyse these images to generate 3-D model data.

Several analysis techniques may be used, optionally in a complementary manner.

Silhouette analysis uses the edges of objects within the captured images to estimate the object's profile local to that edge. The object profile can then be extruded orthogonal to the profile for each viewpoint until it intersects with another extruded profile (typically extruded from another viewpoint), to create an approximation of the object's shape. It will be appreciated that as the number of viewpoints increases according to the scheme described previously herein, each extrusion will subtend a smaller angle around the object, resulting in a more accurate overall model of the object.

Stereoscopic analysis uses the relative displacement of the same objects within two overlapping viewpoints to calculate their distance from the or each viewpoint. From this information, a depth map can be constructed that is indicative of the 3D shape of the object in the region visible to both viewpoints. Hence again where more viewpoints are available, successive pairs of viewpoints can be used to build a map of the surface of a viewed object.

In either case, where there is no viewpoint information, this may be estimated by correlating environmental features between images, and selecting viewpoint positions and directions that provide the best correlation for the relative positions of these features.

It will be appreciated that silhouette analysis and stereoscopic analysis can be used to complement each other. For example the two techniques can be used to detect errors in each other's models; where the two techniques generate estimates of an object surface that differ by a threshold amount, the estimate that most closely matches an interpolation between nearby estimates of the object surface from the two techniques that are within a threshold agreement may be used, with the other estimate being discarded. Optionally, such areas of the model may also be highlighted for inspection and/or editing by the user prior to printing, as discussed later herein.

The above techniques are particularly useful where the image data is obtained from third parties (for example from screenshots on a forum), and there is no additional metadata available.

However, in the case of images generated and captured by the entertainment device, it is possible to also capture associated depth information generated by the entertainment device itself. As was noted previously, during a conventional render of a viewpoint, elements of the environment that are occluded from the rendered view are culled. This occlusion is determined, at least in part, by the relative distance of objects in the environment from the virtual camera; for example objects that are behind other objects are deemed to be occluded and thus culled. These distances are calculated by the entertainment device for this purpose. This means that there is an accurate and per-pixel (or even sub-pixel) resolution distance or 'depth' map available for each captured image.

In an embodiment of the present invention, this depth map is also captured and associated with each image captured by the entertainment device for use in the generation of the 3D model. In principle, this information can be obtained in a manner that is transparent to the operation of the renderer by copying the so-called z-buffer used when generating the image. Consequently the image capture process does not require modification of a game rendering engine.

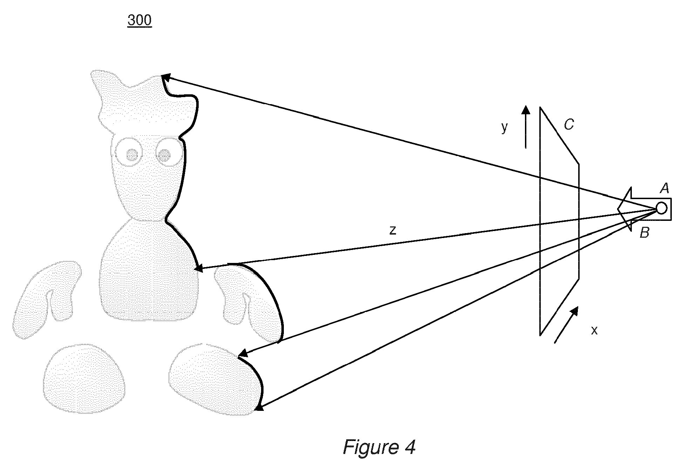

Referring now to Figure 4, given information regarding the position *A* and viewpoint direction *B* of each image, together with the associated distance information *z,* the pixels of each image can be projected to respective points within a shared virtual modelling space 300. In effect, each pixel is displaced from the position A of the image viewpoint by amount x,y,z in a co-ordinate scheme local to the image (but which may be rotated to a co-ordinate scheme common to the shared virtual modelling space, using known techniques). Here, x and y are the pixel co-ordinates in the captured image (represented by notional screen *C*), and z is the associated depth or distance value for that pixel from the camera position A. Only one column of pixels (i.e. for a single value of x) have been projected in Figure 4 for clarity, but it will be appreciated that all pixels of the image can be projected in this manner.

The result is that the pixels of each image will be positioned within the shared virtual modelling space at their correct position in 3D on the surface of a virtual object in the scene, as illustrated in Figure 4 using the example of Blobman. As each image is projected into the shared virtual modelling space, more of the surface of each object in the scene will be 'painted-in' in this manner. Where two images project the same pixel onto the same point in 3D space, the second projected pixel may be discarded or may replace the first pixel.

It will be appreciated that pixels are two dimensional objects. Consequently in an embodiment of the present invention, when a pixel from an image is projected to a position xᵢ, yⱼ, zₖ in the shared virtual modelling space, in fact a voxel (a typically cubic 3-dimensional pixel) is created at that position, and the colour information associated with the projected pixel is used as the colour information for the voxel.

The effect is that a shell of voxels representing the visible surface of the virtual environment is built up by projecting the colour data of the image pixels in each image to x,y,z positions in the shared virtual modelling space.

It will be appreciated that instead of projecting plural images into a shared modelling space using the z-buffer depth information from the entertainment device, this depth information may be estimated using the previously discussed techniques of stereoscopic depth estimation and/or silhouette analysis and surface extrusion. Hence these techniques may also be used to drive the assembly of a voxel shell within a shared model space in the above described manner.

In any event, once all the images have been used, the resulting shell of voxels can be analysed for integrity. Any gaps in a surface (optionally below a threshold size) may be filled in by interpolation from the surrounding surface.

Having generated an estimate of the 3D shape of the environment in the form of the voxel shell, a 3D model can be generated for printing.

It will be appreciated that a model shell one voxel thick is unlikely to be strong enough when printed as a physical model.

Accordingly, the shell can be extruded to a predetermined thickness. The extrusion may be performed by adding adjacent voxels to each surface voxel on the side opposite to the side(s) from which they were projected into the shared virtual modelling space (i.e. on the inside or underside of the shell). The number of voxels added may be the lesser of *M* voxels or the number needed to reach an opposite existing surface of an object. *M* may be chosen to result in a thickness responsive to the weight and strength of the material being used to print the model.

Similarly, the lowest point within the (now extruded) model can be determined. At least two additional points, typically on the underside of the shell, can be extruded further to match the lowest point, thus providing at least three points of support for the physical model. Preferably, these points of support are distributed around a calculated centre of mass of the model.

In this way, a 3D model of the virtual environment can be constructed from plural in-game images that will stay up when physically printed and is viewable from a plurality of angles.

The model is then sent to a 3D printer driver, which slices the model into layers from the bottom up. These layers are then successively printed by the 3D printer as described previously.

### Modifying the model

As described above, an analysis of images of the virtual environment can be used to generate a voxel shell that can be used as the basis for 3D printed model. Some environments are more suited to this 3D printing process than others. For example, the simple block-based environment within Minecraft® will lend itself very well to being rendered by a 3D printer.

However, this is the exception rather than the rule. A particular appeal of video games is their ability to present environments and characters that are not bound by the normal rules of physics. In particular, objects may exist in a predetermined relationship to each other without having physical connections (as exemplified by the character 'Blobman' in Figure 3, whose hands and feet are not physically attached to his torso in this figure), whilst other objects may be defined only in two dimensions within the three-dimensional environment, such as curtains, capes and in many cases environmental components such as walls. This is because physical strength is not a requirement of the virtual environment, where program rules prevent movement beyond certain boundaries, and the walls are simply decorative surfaces for textures demarcating those boundaries.

Hence a virtual environment may comprise several bounding surfaces that have zero thickness, upon which are placed physical objects, some of which may additionally be unstable or unsupported if physically printed. An example of such bounding surfaces may be the walls of the room 210 in the virtual environment 200 of Figure 3.

It may not be feasible to faithfully print such a virtual environment using a 3D printer.

Accordingly, in an embodiment of the present invention, the voxel shell described previously is modified to take account of physical requirements of the 3D printed model.

As noted previously, the shell of voxels can be extruded to be *M* voxels thick, to provide some physical strength. This also addresses the problem of 2D objects within the environment, as the shell of voxels corresponding to these objects are extruded in the same as any other element of the shell of voxels.

However for some elements of the environment, this may not provide sufficient physical support, or in the case of aerial objects in the environment, support may be missing entirely.

### Procedural Supplementary Geometry

Accordingly, procedurally defined modifications to the voxel shell may be provided for the purposes of 3D printing. These procedural modifications provide structural strength and/or physical support for some elements of the virtual environment that it would not otherwise be feasible to replicate in a 3D printed model.

Hereinafter references to 'printer geometry' refers the voxels created to define the 3D model for printing.

Procedurally generated or modified printer geometry may be generated by the entertainment device once the initial voxel shell has been generated.

The voxel shell is analysed to detect whether additional geometry is required, according to several basic rules.

One analysis step is to detect whether there are unsupported objects within the environment.

If so, then these may be made subject to a *de minimis* size threshold so that objects below the threshold, such as for example snowflakes, bullets etc., are ignored and subsequently not retained within the 3D model. The associated voxels in the voxel shell may be deleted. Optionally this step may be implemented in a modified rendering process so that these items are never rendered in the first place when collecting images for the model, making the analysis of the images simpler.

Meanwhile for objects that meet the threshold, printer geometry for a support structure such as connecting rod may be procedurally generated between the object and a nearby anchor point, the anchor point being a part of the environment ultimately connected to the ground. The ground itself can be assumed to be connected to the lowest point of the voxel shell. Optionally the analysis can proceed from the lowest part of the voxel shell upwards so that unsupported objects can be sequentially supported, enabling them to support subsequent objects in turn.

Consequently where a video game character is leaping into the air for example, a supporting rod will be formed between the base of their foot and the ground by creating a cylinder of voxels, for example M voxels thick by default.

However, the thickness of the rod may also be procedurally determined according to basic rules. For a given type of printer, the weight by volume of common 3D printer materials and their compression and bending strengths will be known. In addition, the expected size of the printed model will be known. Accordingly, the entertainment device can estimate the weight of unsupported objects, and calculate the thickness of supporting rod needed to adequately support the object within the model. In particular where a connecting rod is partly or wholly lateral and hence may bend, the moment of the unsupported object is a function of its weight multiplied by its distance from the current position along the rod. Furthermore when constructing a connecting rod for such an object, the weight of the connecting rod itself may be a significant proportion of the weight. Consequently the rod may be thicker closer to the anchor point and taper towards the unsupported object as respective parts of the rod support a greater weight at the anchor point than at the unsupported object.

In another analysis step, the above principle can be applied to other parts of the voxel shell; for example a virtual model desk within a game may have legs that are too thin to support the total mass of the desk surface and any objects on the desk. For example, if the desk has a character standing on it, but the desk legs are only a few voxels thick, they may not be strong enough to support the physical model. Accordingly features of the voxel shell can be evaluated to determine the total weight they will be supporting in the model, and where this exceeds a safe margin for the cross sectional area of the voxel shell supporting this weight, this may be thickened by scaling up its cross-section and filling it with voxels. The principle may also for example be applied to trees within the environment, where the cumulative weight of branches and the trunk are used to locally modify the geometry of the branches or trunk to make their cross-section larger to accommodate the weight, in those circumstances where the existing geometry is locally insufficient to accommodate the weight when rendered as a 3D model using the particular materials associated with the 3D printer.

Subsequently, the centre of gravity of the adjusted model may be calculated to detect if it would fall over. If so, then either a support may be moved to restore stability, or optionally the voxel shell may be thickened in one or more selected places to alter the centre of gravity back to a stable position.

As noted previously, two-dimensional components of the environment are extruded along with other parts of the initial voxel shell to create a three-dimensional object with at least a minimum thickness. However, this extrusion process can be further modified as described below.

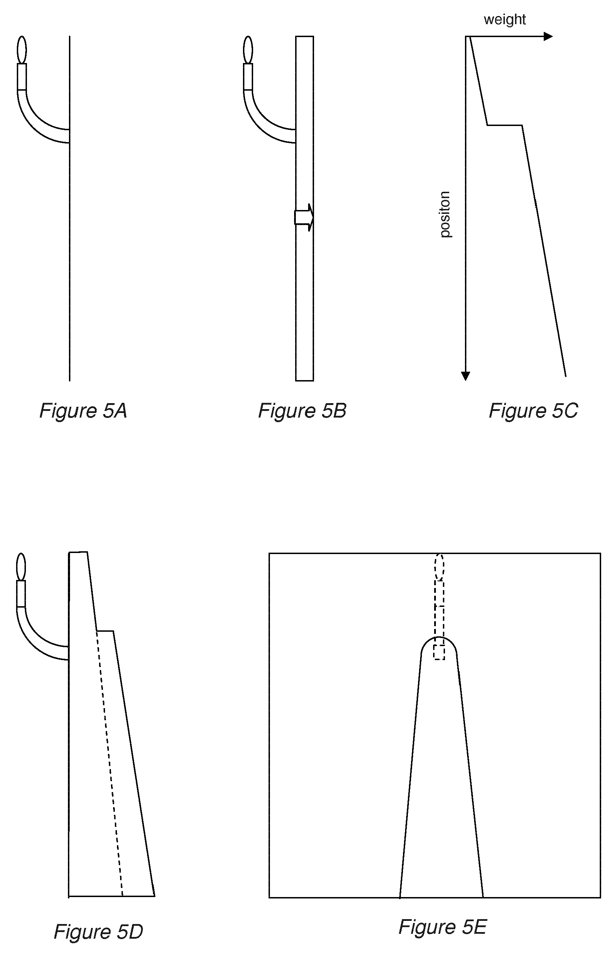

Referring now to Figures 5A-E, it will be seen that Figure 5A represents a two-dimensional wall from the environment 200, upon which a candle and candlestick are placed within the game. Figure 5B then illustrates an extrusion process to extend the wall in a direction normal to the wall plane and opposite to the side from which the image was projected, to procedurally generate geometry describing a wall with a predetermined thickness, for example of M voxels. However as can be seen in Figure 5C, the cumulative weight of the physically printed wall will change according to the position on the wall, and also encounters a step change for parts of the wall additionally supporting the candle and candlestick. Accordingly, a wall of constant thickness may be unsuitable as the thickness of the wall near the base may be insufficient to adequately support the cumulative weight of the model.

Accordingly, with reference to Figures 5D-E, then starting with a minimum preferred thickness of extrusion at the top of the wall, the thickness of the extrusion increases as a function of cumulative weight, resulting in a step change in thickness at the point of attachment of the candlestick to the wall to provide additional support. It will be appreciated that procedural rules may thicken a region around such points of attachment, such that the wall is thickened slightly before the load of the candlestick is applied to the wall, as illustrated in Figures 5D-E. In addition, the procedural rules may accommodate the additional mass of the supportive thickening itself when extruding lower portions of the wall. Finally, the load imposed by the candlestick and the supporting region may be distributed laterally as well as vertically, so that the thickened supporting region splays sideways as it propagates down the wall, as shown in Figure 5E.

The procedural rules may also interact with additional information provided by a game developer, to assist in generating desirable supplementary geometry automatically.

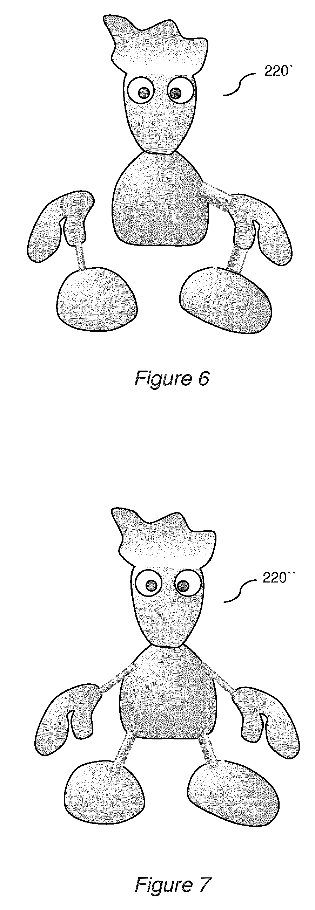

For example, the previously noted rule that a connecting rod is procedurally generated between an unsupported object and the nearest anchor point, where the anchor point is a part of the environment ultimately connected to the ground, may result in 3D model of Blobman 220' as illustrated in Figure 6. It will be appreciated that when the character's hands are analysed, it is likely that they are closer to the character's feet than to the character's torso, and possibly also that the character's torso will not yet be connected to an anchor structure itself. Accordingly the procedural rules may attach the character's hand to the only grounded anchor points available, which are the feet; subsequently the torso may be anchored to the closest single anchor point, which is now one of the hands. The result is a structure that, whilst stable, does not conform anatomically to what the user might expect.

Accordingly, game developers (or users) may identify preferred points of connection between elements of the environment in order to guide the procedural generation of connecting rods or other connecting/support structures. These points of connection may be defined by use of a reserved value within one or more colour channels, enabling points of connection to be identified by use of a specifically coloured identifying pixel within an image; for example if the value 128 was reserved on the blue channel to denote a connecting point, then this can be used in the example of the Blobman character 220" of Figure 7 to specify where preferred connecting points exist on the model. These reserved values are then used within the voxel shell, creating identifiable anchor points for use with the procedural rules. For example, matching values in the other two colour channels of the identifying pixel can be used to indicate paired connecting points, so that red and green values in the identifying pixel could be the same for the hand and the torso, causing these to be identified as sections to be connected together. In this way, artistic control of the placement of connecting structures can be maintained by the developers without the need for separate metadata. In the case of Blobman, this could be used to ensure an anatomically acceptable set of connecting rods, as can be seen in Figure 7. Meanwhile, the rules for procedural generation of the connecting/support structure will still determine the required cross-section needed to adequately support the printed structure.

It will also be appreciated that for elements of the supplementary printer geometry not found in the rendered game (such as the connecting rods in the 'Blobman' example above), textures (colours) may be extrapolated from the existing voxel shell, or a no colour may be specified. In the case that colours are extrapolated, optionally the colours may be extrapolated from the portion of the structure supporting an element against gravity (e.g. the ground, or in the case of Blobman, from the feet to the torso, and from the torso to the hands and head, respectively), as this is likely to create the most unobtrusive supporting structure within the model. Alternatively in the case of using no texture, the bare plastic (or other 3D printer material) is left exposed, making it clear to the viewer that this is a functional support that is not part of the original image. Which approach is preferred may be an artistic decision for the user.

It will also be appreciated that the pixel resolution of the rendered images may be higher than the voxel resolution of the 3D printer at the scale chosen for printing. Consequently features of the rendered environment may sometimes have a high spatial frequency relative to the voxel resolution of the 3D printer. Accordingly the images may be filtered to a compatible resolution before projection into the shared virtual model space, to remove such high-frequency detail and thereby avoid aliasing effects in the resulting model. In this case, where reserved colour channel values are to be used by procedural rules, these are preserved or reinserted into the lower resolution image after filtration. The depth information may be similarly filtered.

### Object Selection

The above discussion has assumed that a region of the virtual environment displayed to the user will be replicated as a 3D model. However, optionally the user may specify one or more objects in the environment for 3D printing alone; for example, the user may select to just print their avatar, or their avatar and an opponent.

This selection may be done for example by a user interface for defining a bounding box around the desired object(s), or by a user interface for indicating specific objects within the game environment using a cursor or reticule.

Where the object(s) are selected in this manner in isolation from a supporting surface, a default surface such as a flat panel may be generated having an area responsive to the size of the selected object(s). The selected object(s) can then be coupled to the support surface using the techniques described herein.

### Editing

Once the printer geometry has been obtained using the above techniques as applicable, then optionally they may be transferred to an editing application for the user to preview or modify the model before sending it to the printer. For example it may be desired to review the model for possible errors, and/or to edit the pose and positioning of certain key characters. The editor may likewise enable the addition of decals, either purely to painted textures, or to the surface structure of objects for example by deleting surface voxels so that the user can effectively engrave messages into a surface of the model.

### Final Print

Once the user is satisfied with their 3D model, it may be sent to the printer. As described previously, a printer driver analyses the model and divides it into layers of voxels for successive printing.

Where the printer is a domestic device either physically attached to the console or sharing a home network, then the printer driver may be implemented on the entertainment device, and the resulting drawing list is sent to the printer by the entertainment device.

However optionally a printing service may be provided by the entertainment device's network (that is to say, a network provided for example by the manufacturers of the entertainment device). This may allow access to a more expensive and sophisticated 3D printer than the average consumer could afford, and consequently a better quality model. In these circumstances either the printer driver may still be on the console, to distribute processing load among users, or may be at a central server connected to the 3D printer. In the first instance local printer drivers will generate drawing lists that may be sent securely to a central print queue server, together with meta data relating to the postal address of the user. In the second instance the entertainment device securely sends the 3D model printer geometry to a central printer driver that performs the relevant analysis to generate the required drawing lists before queueing them for printing. In either of these cases, printing of the model may be contingent upon the payment of a fee, for example via a payment card registered with the entertainment device's network, or similarly may be contingent upon the receipt of a voucher which might be earned for example as a trophy or other in-game award, or as part of the purchase price of a game, entitling the user to the creation of a predetermined number of 3D models from that game.

### Waste Materials

It will be appreciated that 3D Printing techniques such as selective laser sintering can trap large quantities of the raw printer material inside the resulting model. This is because such techniques apply successive layers of powder across the top of the model during printing, fusing only a small proportion corresponding to the model's periphery but leaving the remaining powder inside that periphery untouched. The overall result is a volume of powder within which is a fused shell, with the powder outside that shell being removable, whilst the powder inside the shell is trapped.

This creates unnecessary costs in terms of wasted raw materials. It can also affect the balance of the resulting objects. Consequently it is commonplace to include vents or openings in models designed for 3D Printing to allow the waste powder to be poured or washed out.

However, such vents or openings are not present in videogame characters and are not desirable.

Accordingly, in an embodiment of the present invention, if a powder-based printer is to be used, a procedural rule is implemented to calculate the effective volume of space within objects in the printed scene. Where that volume exceeds a threshold amount, the object is treated as a hollow body and a procedural rule creates an opening in the voxel shell of the hollow body of a size that allows printer powder to flow out. Preferably, the opening is located on the underside of the hollow body and/or on a side facing away from the original viewpoint displayed on screen to the user when they indicated that they wanted to print the scene. The opening may be a hole in the voxel shell, or preferably an annular gap forming a ring or some other shape of closed loop. In the case of an annular gap, this results in a loose cover in the printed body that can be removed to allow the powder out, but which can then by adhered back onto the model, minimising the aesthetic impact of removing the powder on the finished object.

It will be appreciated that a 3D printed scene may comprise multiple such hollow bodies. For example, the scene may comprise the ground, a character such as Blobman, and a tree. The ground is typically an open shell. Meanwhile the tree rests upon it, with the ground forming the base of the tree. Following calculations of the volume within the model, the tree trunk may be identified as a hollow object. Accordingly, a hole may be created in the ground beneath the tree, visible only if the model is viewed from the underside. By contrast, the Blobman character is supported by connecting rods above the ground. Consequently if the character torso is identified as a hollow object, an annular gap is included facing away from the original viewpoint, optionally at a position a threshold distance from any connecting rod. This allows the torso to be drained of powder but also to be repaired by affixing back in place the removable component of the torso created by the annular gap.

Optionally, the procedural rule may use features of the object itself to reduce the aesthetic impact of the hole or annular gap, for example by setting some or all of one or more edges of the hole or gap to follow adjacent a boundary between texture colours in a model, and/or to follow adjacent a ridge or other discontinuity in the model surface.

The system may use the 3D model data to estimate the volume of printer raw material needed, and provide a quote estimating the cost of printing the model before the user commits to doing so.

### Summary embodiments

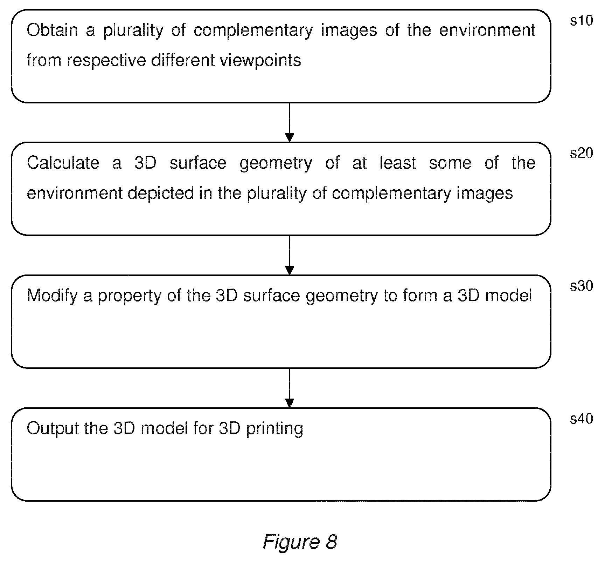

Referring now to Figure 8, in a summary embodiment of the present invention, a method of 3D printing a virtual environment comprises:
in a first step s10, obtaining a plurality of complementary images of the virtual environment from respective different viewpoints;
in a second step s20, calculating a 3D surface geometry of at least some of the environment depicted in the plurality of complementary images;
in a third step s30, modifying a property of the 3D surface geometry to form a 3D model; and
in a fourth step s40, outputting the 3D model for 3D printing.

It will be appreciated that in the first step, the complementary images can be obtained as described above from an entertainment device directly, or via still images or frames of a video taken at different viewpoints within the virtual environment.

In an instance of the summary embodiment, the step of calculating a 3D surface geometry comprises the sub-step of obtaining for the respective images the position and direction of view of the virtual camera used to generate the respective image.

It will be appreciated that as described above, this information can be obtained directly from the entertainment device if it is rendering the complimentary images, or may be included as meta data in images or video, or may be estimated from the correlation or correspondence between features of the virtual environment depicted in the complimentary images or video.

Optionally, the field of view of the virtual camera may also be obtained either directly from entertainment device if it is rendering the complimentary images, or may be included as meta data in images or video, or may be estimated from the correlation or correspondence between features of the virtual environment depicted in the complimentary images or video.

Instance of the summary embodiment, the step of calculating a 3D surface geometry comprises the sub-steps of estimating a respective profile of an environmental feature from its silhouette in respective plural complementary images, and extruding the respective profiles within a 3D space until they intersect or reach a termination criterion.

It will be appreciated that the profile environmental feature may be identified by edge detection means such as a Laplace transform of the image, and/or may be detected by relative displacement to background features between adjacent images in the set of complimentary images. The termination criterion for extrusion may be to extrude by a maximum of *P* voxels, with the method subsequently relying on interpolation between extruded elements of the object to fill in any gaps. Where the method is used in conjunction with stereoscopic estimation of distance, then the termination criterion for extrusion may be to extrude by the number of voxels that subtend an angle between two complimentary images at the estimated distance to the extruded profile.

In an instance of the summary embodiment, the step of calculating a 3D surface geometry comprises the sub-steps of estimating a depth profile of an environmental feature from its relative displacement in two complementary images; and applying the depth profile as a surface profile of the environmental feature within a 3D space, as discussed previously in.

In an instance of the summary embodiment, the step of calculating a 3D surface geometry comprises the sub-step of obtaining depth information for one or more of the plurality of complementary images that was generated by the device that rendered the or each image, as discussed previously herein.

It will be appreciated that this information may be obtained by duplicating the contents of the z-buffer or an equivalent depth buffer for the currently rendered image. Where all of the complimentary images are generated by the same device for the purpose of generating a 3-D model according to the techniques described herein, it will be appreciated that this information may be obtained for all of the complimentary images.

In this instance, the step of calculating a 3D surface geometry comprises the sub-step of projecting elements of an image from the position of the respective virtual camera in a 3D space by a distance specified by the depth information, as discussed previously herein with reference to figure 4. The elements may be pixel data from the captured image or where it has been filtered, lower resolution pixels or equivalent information for a subsample of the x, y positions in the captured image. It will be appreciated that if the scale of the shared model space is chosen to be different to the scale of the virtual environment, then the x, y and z values used project image information may be scaled accordingly.

In an instance of the summary embodiment, step of modifying a property of the 3D surface geometry may comprise the sub-step of procedurally generating supplementary geometry according to one or more generative rules responsive to the 3D surface geometry, as discussed previously.

In this instance, the sub-step of procedurally generating supplementary geometry may comprise thickening at least part of the shell of voxels by a predetermined amount, as discussed previously herein.

In this instance, the sub-step of procedurally generating supplementary geometry may comprise calculating the cross-sectional area of a support structure required to support the weight of a part of the 3D printer model that is supported by the support structure, and setting or modifying the cross-sectional area of said support structure accordingly, as discussed previously herein.

In this instance, the sub-step of procedurally generating supplementary geometry may comprise estimating the internal volume of an environmental feature of the model (such as a tree or game character, as described previously), and where this exceeds a predetermined threshold, create a gap (e.g. a hole or annular gap) in the shell of voxels corresponding to the environmental feature, thereby enabling printer powder to be retrieved from the internal volume of the environmental feature.

Instance of the summary embodiment, the step of creating a 3D printer geometry comprises one or more selected from the list consisting of spatially filtering the complementary images, and spatially filtering the 3D surface geometry, responsive to the resolution of the 3D printer to which the geometry will be sent.

It will be appreciated that in the summary embodiment, the 3D printer geometry may comprise a shell of voxels, modified as appropriate in the third step s30.

Referring now back to Figure 1, in a summary embodiment of the present invention, an entertainment device comprises processing means (such as APU 20 and in particular CPU 20A) arranged in operation to generate a virtual environment, rendering means (such as APU 20 and in particular GPU 20B) arranged in operation to render a plurality of complementary images of the environment from respective different viewpoints of a virtual camera, processing means (such as APU 20 and in particular CPU 20A) arranged in operation to calculate a 3D surface geometry of at least some of the environment depicted in the plurality of complementary images, processing means (such as APU 20 and in particular CPU 20A) arranged in operation to modify a property of the 3D surface geometry to form a 3D model, and output means (such as APU 20 and in particular CPU 20A, together with one or more of USB 35, WiFi® 34, Bluetooth® 33, and Ethernet® 32) arranged in operation to output the 3D model for 3D printing.

In instance of the summary embodiment, the entertainment device comprises obtaining means (such as APU 20 and RAM 22) arranged in operation to obtain depth information for the plurality of rendered complementary images, and projecting means (such as APU 20) arranged in operation to project elements of an image from the respective position of the virtual camera in a 3D space by a distance specified by the depth information, as discussed previously herein.

In an instance of the summary embodiment, the entertainment device comprises communication means arranged in operation to send data representative of the 3D printer geometry to a remote server associated with a 3D printer for printing, in which the communication means is arranged in operation to securely send data indicative that a qualifying criterion for proceeding with printing has been met, as discussed previously herein.

It will be appreciated that the entertainment device of the summary embodiment comprises means for implementing the above recited instances of the first summary embodiment relating to the method of 3D printing. Typically the means comprise the APU running under suitable software instruction to implement the method.

Hence more generally, it will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product, for example comprising processor implementable instructions stored on a tangible non-transitory machine-readable medium such as a floppy disk, optical disk, hard disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Such a computer program may comprise computer software which, when executed by a computer, causes the computer to implement one or more of the methods as discussed above. Separately, such a computer program may be transmitted via data signals on a network such as an Ethernet, a wireless network, the Internet, or any combination of these of other networks.

Finally, in a summary embodiment of the present invention, the entertainment device 10 and the 3D printer 100 together form a 3D printing system, where the 3D printer is arranged in operation to receive from the entertainment device printing instructions descriptive of the structure of the 3D model.

## Claims

1. A method of 3D printing a virtual environment, comprising the steps of:
obtaining a plurality of complementary images of the virtual environment from respective different viewpoints;
calculating a 3D surface geometry of at least some of the environment depicted in the plurality of complementary images;
modifying a property of the 3D surface geometry to form a 3D model; and
outputting the 3D model for 3D printing.

2. A method of 3D printing a virtual environment according to claim 1, wherein the step of calculating a 3D surface geometry comprises the sub-step of:
obtaining for the respective images the position and direction of view of the virtual camera used to generate the respective image.

3. A method of 3D printing a virtual environment according to claim 1 or 2, wherein the step of calculating a 3D surface geometry comprises the sub-steps of:
estimating a respective profile of an environmental feature from its silhouette in respective plural complementary images; and
extruding the respective profiles within a 3D space until they intersect or reach a termination criterion.

4. A method of 3D printing a virtual environment according to any preceding claim, wherein the step of calculating a 3D surface geometry comprises the sub-steps of:
estimating a depth profile of an environmental feature from its relative displacement in two complementary images; and
applying the depth profile as a surface profile of the environmental feature within a 3D space.

5. A method of 3D printing a virtual environment according to any preceding claim, wherein the step of calculating a 3D surface geometry comprises the sub-step of:
obtaining depth information for one or more of the plurality of complementary images that was generated by the device that rendered the or each image.

6. A method of 3D printing a virtual environment according to claim 5, wherein the step of calculating a 3D surface geometry comprises the sub-step of:
projecting elements of an image from the position of the respective virtual camera in a 3D space by a distance specified by the depth information.

7. A method of 3D printing a virtual environment according to any preceding claim, wherein the step of modifying a property of the 3D surface geometry comprises the sub-step of:
procedurally generating supplementary geometry according to one or more generative rules responsive to the 3D surface geometry.

8. A method of 3D printing a virtual environment according to claim 7, wherein the sub-step of procedurally generating supplementary geometry comprises thickening at least part of the shell of voxels by a predetermined amount.

9. A method of 3D printing according to claims 7 or 8, in which the sub-step of procedurally generating supplementary geometry comprises:
calculating the cross-sectional area of a support structure required to support the weight of a part of the 3D model that is supported by the support structure; and
setting or modifying the cross-sectional area of said support structure accordingly.

10. A method of 3D printing according to any one of claims 7 to 9, in which the sub-step of procedurally generating supplementary geometry comprises:
estimating the internal volume of an environmental feature of the model, and where this exceeds a predetermined threshold;
creating a gap in the shell of voxels corresponding to the environmental feature.

11. A computer program product comprising computer software which, when executed by a computer, causes the computer to implement the steps of any preceding method claim.

12. An entertainment device, comprising:
processing means arranged in operation to generate a virtual environment;
rendering means arranged in operation to render a plurality of complementary images of the environment from respective different viewpoints of a virtual camera;
processing means arranged in operation to calculate a 3D surface geometry of at least some of the environment depicted in the plurality of complementary images;
processing means arranged in operation to modify a property of the 3D surface geometry to form a 3D model; and
output means arranged in operation to output the 3D model for 3D printing.

13. An entertainment device according to claim 12, comprising
obtaining means arranged in operation to obtain depth information for the plurality of rendered complementary images; and
projecting means arranged in operation to project elements of an image from the respective position of the virtual camera in a 3D space by a distance specified by the depth information.

14. An entertainment device according to claim 12 or claim 13, comprising:
communication means arranged in operation to send data representative of the 3D surface geometry to a remote server associated with a 3D printer for printing;
in which the communication means is arranged in operation to securely send data indicative that a qualifying criterion for proceeding with printing has been met.

15. A 3D printing system, comprising:
an entertainment device according to claim 12 or 13; and
a 3D printer arranged in operation to receive printing instructions descriptive of the structure of the generated 3D model.
